# FASCICULE DE BREVET EUROPEEN

(11) **EP 3 627 032 B1**
(45) Date de publication et mention de la délivrance du brevet: **23.11.2022**
(21) Numéro de dépôt: 19195427.0
(22) Date de dépôt: 04.09.2019
(51) Int. Cl.: F16N 39/00, F01M 1/10, F01M 11/03, G01N 15/06, B03C 1/033, B03C 1/28, G01N 15/00

(54) **DISPOSITIF MAGNETIQUE DESTINE A CAPTER DES PARTICULES METALLIQUES D'USURE EN SUSPENSION DANS UN FLUIDE DE LUBRIFICATION**
MAGNETISCHE VORRICHTUNG ZUM EINFANGEN VON VERSCHLEISSBEDINGT ENTSTANDENEN METALLTEILCHEN IN SUSPENSION IN EINER SCHMIERFLÜSSIGKEIT
MAGNETIC DEVICE INTENDED FOR CAPTURING WEAR METAL PARTICLES SUSPENDED IN A LUBRICATION FLUID

(30) Priorité: 19.09.2018 FR 1800986
(43) Date de publication de la demande: 25.03.2020
(73) Titulaire: Airbus Helicopters, 13725 Marignane Cedex (FR)
(72) Inventeur: BASSO, Benoît, 13122 VENTABREN (FR); LE RU, John, 37310 TAUXIGNY (FR); GOUJET, Damien, 13960 SAUSSET LES PINS (FR)
(74) Mandataire: GPI & Associés

(56) Documents cités:
- EP-A1- 0 116 468
- GB-A- 590 173
- GB-A- 2 029 580
- US-A- 2 462 715
- US-A- 3 869 391
- US-A- 5 264 832
- US-A- 5 634 755
- US-A1- 2015 177 116

## Description

La présente invention se rapporte au domaine des dispositifs magnétiques permettant d'isoler, d'immobiliser et de capter des particules métalliques d'usure en suspension dans un fluide de lubrification. Un tel fluide de lubrification peut notamment être une huile permettant la lubrification d'organes de transmission de puissance, d'un moteur ou de tout système mécanique présentant des pièces en mouvement relatif.

Plus précisément, ces dispositifs magnétiques sont généralement rapportés au niveau d'une paroi d'un carter du système mécanique en le traversant. Ainsi, de tels dispositifs magnétiques peuvent être démontés de l'extérieur du carter.

Selon un premier type de dispositifs magnétiques, et tels que décrits dans les documents US 2015 / 177116, US 3 869 391, US 2 462 715, GB 590 173, US 5 634 755, FR 2 564 897, EP 0 398 800 et EP 0 576 306, il est connu d'utiliser un aimant permanent présentant une forme cylindrique entre deux extrémités planes et parallèles. En outre, une telle forme cylindrique comporte un axe de révolution confondu avec une direction rectiligne d'insertion du dispositif magnétique dans la paroi du carter sur lequel le dispositif magnétique est rapporté.

Par ailleurs, ces dispositifs magnétiques conformes à ce premier type comportent également deux pièces ou masses polaires agencées au niveau des deux extrémités planes et parallèles de l'aimant permanent et permettant de générer une force magnétique d'attraction "radiale" sur 360° tout autour de sa paroi cylindrique. Les particules métalliques d'usure en suspension dans le fluide de lubrification sont alors captées et immobilisées sur la paroi cylindrique de l'aimant permanent entre les deux pièces ou masses polaires.

Cependant, une telle paroi cylindrique ne constitue pas la zone d'attraction maximale de l'aimant permanent. En effet, les particules métalliques d'usure sont attirées par les deux pièces ou masses polaires engendrant la formation d'au moins un pont de particules métalliques d'usure le long de la paroi cylindrique de l'aimant permanent. La force magnétique d'attraction n'étant pas maximale, la quantité de particules métalliques captées par de tels dispositifs magnétiques générant une force magnétique d'attraction "radiale" est donc limitée et peu représentative de l'usure réelle des pièces en mouvement relatif contenues dans le carter.

On connait également des dispositifs magnétiques selon un second type permettant de générer une force magnétique d'attraction "axiale" au niveau d'une extrémité libre. De tels dispositifs magnétiques ont notamment été décrits dans les documents EP 0 116 468, GB 2 029 580, FR 2 443 691, FR 2 581 455, FR 2 598 818, WO 2017 / 157855 et EP 3 279 650.

Les particules métalliques d'usure en suspension dans le fluide de lubrification sont alors captées et immobilisées au niveau de l'extrémité libre de l'aimant permanent formé par une première pièce polaire et une deuxième pièce polaire juxtaposées l'une à coté de l'autre.

Cependant, une telle juxtaposition de deux pièces polaires ne permet pas de générer une force d'attraction maximale tout autour de l'aimant permanent. En effet, les particules métalliques d'usure sont attirées par les deux pièces ou masses polaires engendrant la formation d'au moins un pont de particules métalliques d'usure uniquement au niveau de l'extrémité libre de l'aimant permanent. La force magnétique d'attraction étant uniquement axiale au niveau de l'extrémité libre, la quantité de particules métalliques captées par de tels dispositifs magnétiques est donc également limitée et peu représentative de l'usure réelle des pièces en mouvement relatif contenues dans le carter.

En outre, le document US 5 264 832 décrit quant à lui un dispositif magnétique destiné à capter des particules métalliques d'usure en suspension dans un fluide de lubrification. Ce dispositif comporte ainsi un ou deux aimants permanents pour attirer les particules métalliques et un organe de détection formés par deux conducteurs électriques s'étendant en regard de faces polaires du ou des aimants permanents.

Cependant, un tel document ne divulgue pas une dimension longitudinale particulière des faces polaires de l'aimant permanent qui est parallèle à un axe longitudinal X. En effet, seule une épaisseur particulière de l'aimant permanent est divulguée par ce document.

Ainsi, la force d'attraction magnétique s'exerçant radialement en regard de chacune des deux faces polaires n'est pas optimale et le dispositif magnétique ne permet pas de capter l'ensemble des particules magnétiques en suspension dans le fluide de lubrification.

La présente invention a alors pour objet de proposer un dispositif magnétique permettant de s'affranchir des limitations mentionnées ci-dessus. En effet, un tel dispositif magnétique conforme à l'invention permet de générer une force d'attraction maximale en captant radialement des particules métalliques d'usure suivant au moins deux directions distinctes l'une de l'autre.

L'invention se rapporte donc à un dispositif magnétique destiné à capter des particules métalliques d'usure en suspension dans un fluide de lubrification, le dispositif magnétique étant destiné à être inséré suivant une direction rectiligne d'insertion du dispositif magnétique dans une paroi d'un carter, au niveau d'un orifice traversant, permettant de mettre en communication un volume intérieur du carter contenant le fluide de lubrification avec un volume extérieur au carter, le dispositif magnétique présentant un axe longitudinal X, l'axe longitudinal X étant destiné à correspondre coaxialement avec la direction d'insertion du dispositif magnétique dans le carter, le dispositif magnétique comportant :
- au moins un aimant permanent apte à attirer les particules métalliques, le(s) aimant(s) permanent(s) comportant au moins deux faces polaires de polarités distinctes l'une de l'autre, et au moins un organe de détection de présence des particules métalliques attirées par le(s) aimant(s) permanent(s),les faces polaires s'étendant respectivement principalement suivant l'axe longitudinal X et le(s) organe(s) de détection de présence des particules métalliques étant agencé(s) totalement en regard d'une des faces polaires.

Autrement dit, chacune des au moins deux faces polaires permet d'attirer des particules métalliques radialement suivant au moins deux directions directement vers leur surface respective. De plus, ces faces polaires présentent respectivement une surface plane ou courbe dont la dimension la plus importante s'étend suivant l'axe longitudinal X du dispositif magnétique.

Le positionnement relatif du (ou des) organe(s) de détection en regard des faces polaires permet quant à lui de détecter la présence des particules métalliques directement au niveau de la zone d'attraction magnétique présentant une force d'attraction maximale de l'aimant permanent.

Selon l'invention, un tel dispositif est remarquable en ce que les faces polaires présentent respectivement chacune une dimension longitudinale parallèle à l'axe longitudinal X comprise entre 1 et 50 mm (millimètres) et préférentiellement entre 5 et 30 mm (millimètres).

Une telle dimension longitudinale est en effet optimale pour permettre de générer une force d'attraction magnétique maximale radialement en regard de chacune des au moins deux faces polaires.

Avantageusement, le(s) aimant(s) permanent(s) peu(ven)t présenter un volume d'encombrement extérieur de forme choisie parmi le groupe comportant les cylindres et les parallélépipèdes rectangles.

De telles formes permettent en effet à chacune des au moins deux faces polaires de présenter une surface maximale et donc de générer une force d'attraction magnétique la plus grande possible.

En outre, une telle forme cylindrique de l'aimant permanent peut être positionnée selon différentes orientations. Une première orientation peut consister à positionner un axe de révolution de la forme cylindrique perpendiculairement par rapport à l'axe longitudinal X. Dans ce cas, les au moins deux faces polaires sont alors formées par des faces planes, partiellement sphériques ou bombées agencées aux extrémités de la forme cylindrique.

Une seconde orientation peut quant à elle consister à positionner un axe de révolution de la forme cylindrique coaxialement avec l'axe longitudinal X. Dans ce cas, les au moins deux faces polaires sont alors formées par des faces partiellement cylindriques agencées autour de l'axe longitudinal X.

Par ailleurs, un tel dispositif magnétique peut comporter plusieurs aimants permanents juxtaposés de différentes manières.

Ainsi, selon un premier exemple de réalisation avantageux de l'invention, le dispositif magnétique peut comporter au moins deux aimants permanents agencés l'un à côté de l'autre suivant une première direction de translation orientée parallèlement par rapport à l'axe longitudinal X.

Dans ce cas, les faces polaires juxtaposées les unes à coté des autres sont avantageusement de même polarité. De plus, les au moins deux aimants permanents peuvent être agencés les uns contre les autres ou être séparés les uns des autres d'une distance prédéterminée non nulle suivant l'axe longitudinal X.

Selon un second exemple de réalisation avantageux de l'invention, le dispositif magnétique peut comporter au moins deux aimants permanents agencés l'un au dessus de l'autre suivant une deuxième direction de translation orientée perpendiculairement par rapport à l'axe longitudinal X.

De même que précédemment, les au moins deux aimants permanents peuvent être agencés les uns contre les autres ou être séparés les uns des autres d'une distance prédéterminée non nulle perpendiculairement à l'axe longitudinal X. En outre, les faces polaires en regard des au moins deux aimants permanents sont de polarités opposées l'une de l'autre.

Selon une première variante de l'invention, le(s) aimant(s) permanent(s) peu(ven)t être de type unipôle comportant deux faces polaires de polarités distinctes l'une de l'autre, les deux faces polaires étant orientées symétriquement par rapport à l'axe longitudinal X.

Un tel premier type d'aimant permanent unipôle comporte de manière classique un pôle d'une première polarité agencé à une première extrémité de l'aimant et un pôle d'une deuxième polarité opposée à la première polarité agencé à une deuxième extrémité de l'aimant.

Selon une seconde variante de l'invention, le(s) aimant(s) permanent(s) peu(ven)t être de type multipôle comportant au moins quatre faces polaires orientées radialement par rapport à l'axe longitudinal X, les faces polaires étant agencées les unes à côté des autres en étant deux à deux de polarités distinctes l'une de l'autre.

Un tel second type d'aimant permanent multipôle peut être fabriqué par un procédé de frittage et consister en un ensemble monolithique formé dans un alliage de néodyme, de fer et de bore et généralement désigné par la formule chimique Nd2Fe14B. Dans ce cas, les différentes faces polaires peuvent être formées par une pluralité de portions cylindriques juxtaposées lorsque le volume d'encombrement de l'aimant permanent est un cylindre ou encore en une pluralité de faces planes lorsque le volume d'encombrement de l'aimant permanent est un parallélépipède rectangle.

En pratique, le(s) aimant(s) permanent(s) peu(ven)t comporter au moins un trou longitudinal s'entendant parallèlement par rapport à l'axe longitudinal X, le(s) trou(s) longitudinal (longitudinaux) étant traversant(s) entre une face proximale du (ou des) aimant(s) permanent(s) et une face distale du (ou des) aimant(s) permanent(s).

Ce(s) trou(s) longitudinal (longitudinaux) peu(ven)t notamment permettre de solidariser l'aimant permanent avec un support de fixation du dispositif magnétique et/ou de faire passer des fils conducteurs de l'électricité pour permettre de détecter la présence des particules métalliques attirées par le(s) aimant(s) permanent(s).

Avantageusement, le(s) aimant(s) permanent(s) peu(ven)t comporter au moins un trou transversal s'étendant perpendiculairement par rapport à l'axe longitudinal X, le(s) trou(s) transversal (transversaux) étant traversant(s) entre une première face polaire du (ou des) aimant(s) permanent(s) et une seconde face polaire du (ou des) aimant(s) permanent(s).

De même que précédemment, ce(s) trou(s) transversal (transversaux) peu(ven)t notamment permettre de solidariser l'aimant permanent avec un support de fixation du dispositif magnétique et/ou de faire passer des fils conducteurs de l'électricité pour permettre de détecter la présence des particules métalliques attirées par le(s) aimant(s) permanent(s).

Par ailleurs, un tel dispositif magnétique peut comporter différents types d'organe(s) de détection de présence des particules métalliques correspondants à différents modes de réalisation tels que décrits ci-dessous ou encore consistant en une combinaison d'au moins deux de ces modes de réalisation.

Ainsi, selon un premier mode de réalisation de l'invention, le(s) organe(s) de détection de présence des particules métalliques peu(ven)t comporter au moins deux barreaux électriquement conducteurs, un premier barreau étant agencé en regard d'une première face polaire de polarité positive (ou nord) et un second barreau étant agencé en regard d'une seconde face polaire de polarité négative (ou sud).

Autrement dit, la détection de présence des particules métalliques peut être réalisée par la fermeture d'un circuit électrique initialement ouvert entre une première électrode formée par chaque barreau électriquement conducteur et une deuxième électrode plane agencée en regard. L'accumulation radiale en épaisseur des particules métalliques suivant une direction perpendiculaire à l'axe longitudinal X et venant au contact à la fois d'un barreau électriquement conducteur et de la deuxième électrode plane permet alors de fermer le circuit électrique initialement ouvert.

En outre, la deuxième électrode plane peut être formée directement par le matériau constituant l'aimant permanent ou encore par une feuille de matériau conducteur rapportée et/ou collée à la surface de l'aimant permanent.

Selon un deuxième mode de réalisation de l'invention, le(s) organe(s) de détection de présence des particules métalliques comporte(nt) deux groupes de deux nappes orientées de fils électriquement conducteurs formant une grille ou un textile ajouré, un premier groupe étant agencé en regard d'une première face polaire de polarité positive (ou nord) et un second groupe étant agencé en regard d'une seconde face polaire de polarité négative (ou sud).

Dans ce cas, la détection de présence des particules métalliques peut être réalisée par la fermeture d'un circuit électrique initialement ouvert entre une première électrode formée par chaque nappe orientée de fils électriquement conducteurs et une deuxième électrode plane agencée en regard. L'accumulation radiale en épaisseur des particules métalliques suivant une direction perpendiculaire à l'axe longitudinal X et venant au contact à la fois d'une nappe orientée de fils électriquement conducteurs et de la deuxième électrode plane permet alors de fermer le circuit électrique initialement ouvert.

Telle que décrite précédemment, la deuxième électrode plane peut être formée directement par le matériau constituant l'aimant permanent ou encore par une feuille de matériau conducteur rapportée et/ou collée à la surface de l'aimant permanent.

Selon un troisième mode de réalisation de l'invention, le(s) organe(s) de détection de présence des particules métalliques peu(ven)t comporter deux plaques perforées électriquement conductrices, une première plaque étant agencée en regard d'une première face polaire de polarité positive (ou nord) et une seconde plaque étant agencée en regard d'une seconde face polaire de polarité négative (ou sud).

Ainsi, la détection de présence des particules métalliques peut être réalisée par la fermeture d'un circuit électrique initialement ouvert entre une première électrode formée par chaque plaque perforée électriquement conductrice et une deuxième électrode plane agencée en regard. La plaque perforée électriquement conductrice peut notamment être formée par une tôle métallique munie d'une pluralité de trous de forme carrée, rectangulaire ou circulaire.

L'accumulation radiale en épaisseur des particules métalliques suivant une direction perpendiculaire à l'axe longitudinal X et venant au contact à la fois de la plaque perforée électriquement conductrice et de la deuxième électrode plane permet alors de fermer le circuit électrique initialement ouvert.

Comme précédemment, cette deuxième électrode plane peut être formée directement par le matériau constituant l'aimant permanent ou encore par une feuille de matériau conducteur rapportée et/ou collée à la surface de l'aimant permanent.

Selon un quatrième mode de réalisation de l'invention, le(s) organe(s) de détection de présence des particules métalliques peu(ven)t comporter deux circuits imprimés comportant respectivement deux pistes distinctes électriquement conductrices et isolées électriquement l'une de l'autre, un premier circuit imprimé étant agencé en regard d'une première face polaire de polarité positive (ou nord) et un second circuit imprimé étant agencé en regard d'une seconde face polaire de polarité négative (ou sud).

Ainsi sur chacun des premier et second circuits imprimés, la détection de présence des particules métalliques peut être réalisée par la fermeture d'un circuit électrique initialement ouvert entre une première électrode formée par une première piste électriquement conductrice et une deuxième électrode formée par une deuxième piste électriquement conductrice juxtaposée avec la première piste. Chacun des premier et second circuits imprimés peut notamment être formé par un dépôt de matière conductrice sur un support isolant ou par des tôles découpées ou usinées.

L'accumulation longitudinale ou transversale des particules métalliques par exemple suivant une direction parallèle à l'axe longitudinal X et venant au contact à la fois de la première piste et de la deuxième piste permet alors de fermer le circuit électrique initialement ouvert. Chacun des premier et second circuits imprimés présente l'avantage de ne pas générer d'interstices en épaisseur où les particules métalliques peuvent se loger et possède une épaisseur relativement mince permettant l'utilisation d'un aimant permanent de grandes dimensions et donc apte à générer une force magnétique d'attraction importante.

Selon un cinquième mode ne faisant pas partie de l'invention, le(s) organe(s) de détection de présence des particules métalliques peu(ven)t comporter un ensemble monolithique entourant au moins partiellement le(s) aimant(s) permanent(s) en recouvrant une première face polaire de polarité positive (ou nord) et une seconde face polaire de polarité négative (ou sud).

Un tel ensemble monolithique peut par exemple consister en une plaque perforée électriquement conductrice formant une première électrode conformément au troisième mode de réalisation de l'invention.

Cependant suivant un autre exemple du cinquième mode, l'ensemble monolithique peut avantageusement former à la fois une première et une deuxième électrode.

Dans ce cas, l'ensemble monolithique peut alors former un circuit imprimé comportant deux pistes distinctes électriquement conductrices et isolées électriquement l'une de l'autre.

Comme précédemment, la détection de présence des particules métalliques peut être réalisée par la fermeture d'un circuit électrique initialement ouvert entre une première électrode formée par une première piste électriquement conductrice et une deuxième électrode formée par une deuxième piste électriquement conductrice juxtaposée avec la première piste. Le circuit imprimé peut notamment être formé par un dépôt de matière conductrice sur un support isolant ou par des tôles découpées ou usinées.

L'accumulation longitudinale ou transversale des particules métalliques par exemple suivant une direction parallèle à l'axe longitudinal X et venant au contact à la fois de la première piste et de la deuxième piste permet alors de fermer le circuit électrique initialement ouvert. Un tel circuit imprimé présente l'avantage de ne pas générer d'interstices en épaisseur où les particules métalliques peuvent se loger et possède une épaisseur relativement mince permettant l'utilisation d'un aimant permanent de grandes dimensions et donc apte à générer une force magnétique d'attraction importante.

En pratique, le circuit imprimé peut entourer totalement le(s) aimant(s) permanent(s), le circuit imprimé présentant un volume d'encombrement extérieur de forme choisie parmi le groupe comportant notamment les cylindres et les parallélépipèdes rectangles.

Un tel agencement permet notamment d'avoir une seule connexion électrique pour l'organe de détection de présence des particules métalliques et de recouvrir totalement les différentes faces polaires de l'aimant permanent.

Selon un sixième mode de réalisation de l'invention, le(s) organe(s) de détection de présence des particules métalliques peu(ven)t comporter une pluralité de plaques creuses électriquement conductrices séparées les unes des autres par une pluralité de plaques creuses électriquement isolantes, les plaques creuses électriquement conductrices et isolantes étant agencées parallèlement les unes par rapport aux autres et perpendiculairement par rapport à l'axe longitudinal X.

Autrement dit, le(s) aimant(s) permanent(s) est (sont) inséré(s) à l'intérieur d'une pluralité d'orifices centraux ménagés dans les différentes plaques creuses. L'alternance des plaques creuses électriquement conductrices et des plaques creuses électriquement isolantes permet de former deux électrodes distinctes électriquement conductrices et isolées électriquement l'une de l'autre.

Ainsi, la détection de présence des particules métalliques peut être réalisée par la fermeture d'un circuit électrique initialement ouvert entre une première électrode formée par un premier jeu de plaques creuses électriquement conductrices et une deuxième électrode formée par un deuxième jeu de plaques creuses électriquement conductrices. Les plaques creuses électriquement conductrices et électriquement isolantes peuvent notamment être formées par un procédé de découpage ou d'usinage.

L'accumulation longitudinale ou transversale des particules métalliques par exemple suivant une direction parallèle à l'axe longitudinal X et venant au contact à la fois du premier jeu de plaques creuses électriquement conductrices et du deuxième jeu de plaques creuses électriquement conductrices permet alors de fermer le circuit électrique initialement ouvert. A l'instar d'un circuit imprimé, l'alternance des plaques creuses électriquement conductrices et des plaques creuses électriquement isolantes présente l'avantage de pas générer d'interstices en épaisseur où les particules métalliques pourraient se loger et possède une épaisseur relativement mince permettant l'utilisation d'un aimant permanent de grandes dimensions et donc apte à générer une force magnétique d'attraction importante.

Avantageusement, les plaques creuses électriquement conductrices et isolantes peuvent présenter respectivement chacune au moins deux alésages traversants, des premiers alésages des plaques creuses électriquement conductrices et isolantes étant agencés coaxialement entre eux autour d'un premier axe X' et des seconds alésages des plaques creuses électriquement conductrices et isolantes étant agencés coaxialement entre eux autour d'un second axe X", les premier axe X' et second axe X" étant parallèles à l'axe longitudinal X.

Ainsi, les plaques creuses électriquement conductrices et les plaques creuses électriquement isolantes comportent respectivement chacune au moins deux alésages traversants agencés de part et d'autre de l'orifice central recevant le(s) aimant(s) permanent(s). Ces au moins deux alésages traversants s'étendent donc également parallèlement par rapport à l'orifice central ménagé dans chacune des plaques creuses.

Ces au moins deux alésages traversants peuvent notamment permettre de solidariser le(s) organe(s) de détection de présence des particules métalliques avec un support de fixation du dispositif magnétique et/ou de faire passer des fils conducteurs de l'électricité pour permettre de détecter la présence des particules métalliques attirées par le(s) aimant(s) permanent(s) à la surface extérieure des plaques creuses destinées à être en contact avec le fluide de lubrification.

En pratique, le dispositif magnétique peut comporter un clapet d'obturation agencé en regard d'une face distale du (ou des) aimant(s) permanent(s) et perpendiculairement par rapport à l'axe longitudinal X, les plaques creuses électriquement conductrices et isolantes présentant respectivement chacune au moins deux échancrures symétriques l'une de l'autre par rapport à l'axe longitudinal X, ces échancrures étant aptes à recevoir deux branches parallèles à l'axe longitudinal X, les deux branches étant solidaires du clapet d'obturation.

Autrement dit, un tel clapet d'obturation est associé à des moyens de rappel élastiques permettant d'obturer automatiquement le carter lorsque l'(ou les) aimant(s) permanent(s) et le(s) organe(s) de détection de présence des particules métalliques sont extraits du dispositif magnétique.

En outre, le clapet d'obturation est mobile en translation par rapport au support de fixation du dispositif magnétique et est déplacé dans un premier sens de déplacement parallèle à l'axe longitudinal X vers une position d'obturation à l'aide des moyens de rappel élastiques. En revanche lorsque l'(ou les) aimant(s) permanent(s) et le(s) organe(s) de détection de présence des particules métalliques sont insérés à nouveau dans le support de fixation du dispositif magnétique, le clapet d'obturation est déplacé selon un second sens de déplacement opposé au premier sens de déplacement vers une position d'ouverture.

Par ailleurs, un tel clapet d'obturation peut comporter un joint torique pour réaliser, dans la position d'obturation, une étanchéité entre le volume intérieur et le volume extérieur du carter une fois l'(ou les) aimant(s) permanent(s) et le(s) organe(s) de détection de présence des particules métalliques extraits du dispositif magnétique.

L'invention et ses avantages apparaîtront avec plus de détails dans le cadre de la description qui suit avec des exemples donnés à titre illustratif en référence aux figures annexées qui représentent :
- la figure 1, une vue en perspective d'un premier exemple de dispositif magnétique conforme à l'invention,
- les figures 2 à 4 et 9 à 10, des vues en perspectives de différents aimants permanents selon une première variante de l'invention,
- la figure 5 une vue en perspective d'aimants permanents selon d'une part la première variante de l'invention et d'autre part un premier exemple de réalisation de l'invention,
- la figure 6, une vue en perspective d'aimants permanents selon d'une part la première variante de l'invention et d'autre part un second exemple de réalisation de l'invention,
- les figures 7 et 8, des vues en perspectives d'aimants permanents selon une seconde variante de l'invention,
- les figures 11 à 14, des vues en perspective et en coupe transversale d'organes de détection de présence selon un premier mode de réalisation de l'invention,
- la figure 15, une vue en perspective d'organes de détection de présence selon un deuxième mode de réalisation de l'invention,
- les figures 16 à 18, des vues en perspective de différents organes de détection de présence selon un troisième mode de réalisation de l'invention,
- les figures 20 et 21, des vues en perspective de différents organes de détection de présence selon un quatrième mode de réalisation de l'invention,

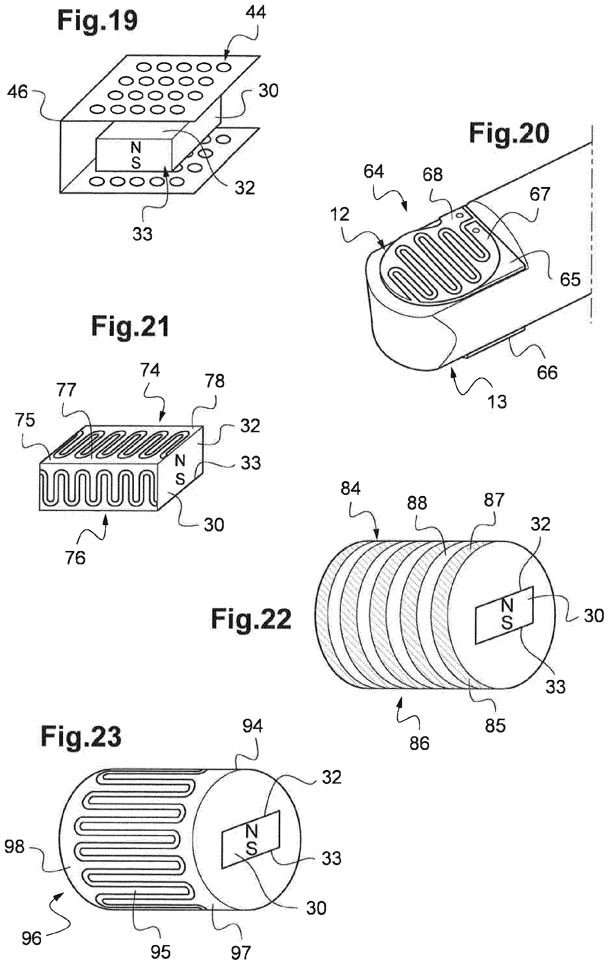

- les figures 19, 22 et 23, des vues en perspective de différents organes de détection de présence selon un cinquième mode ne faisant pas partie de l'invention, et

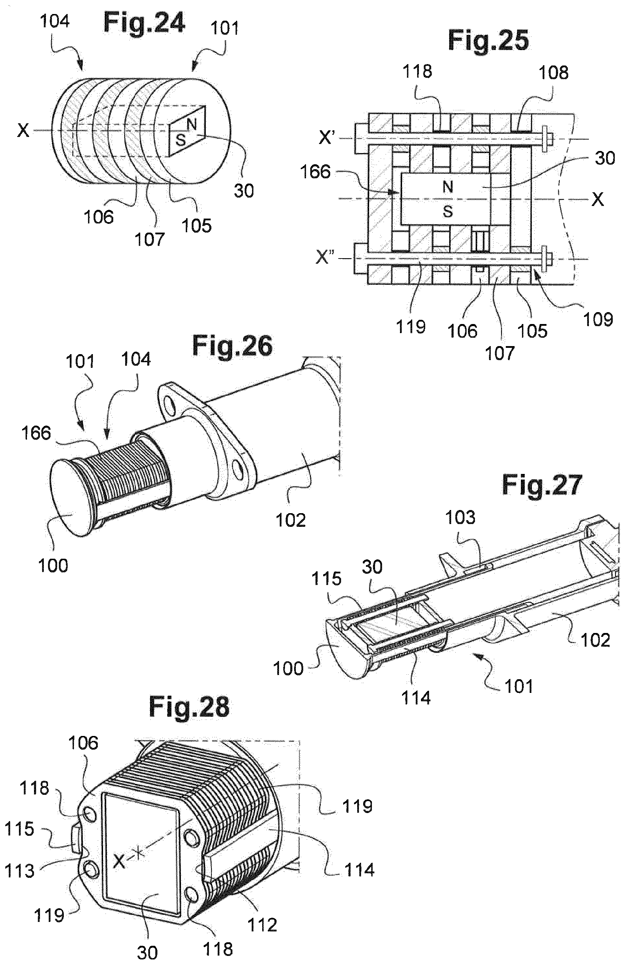

- les figures 24 à 28, des vues en perspective de différents organes de détection de présence selon un sixième mode de réalisation de l'invention.

Les éléments présents dans plusieurs figures distinctes sont affectés d'une seule et même référence.

Comme déjà évoqué l'invention se rapporte aux dispositifs magnétiques permettant de collecter des particules métalliques d'usure en suspension dans un fluide de lubrification contenu dans un carter.

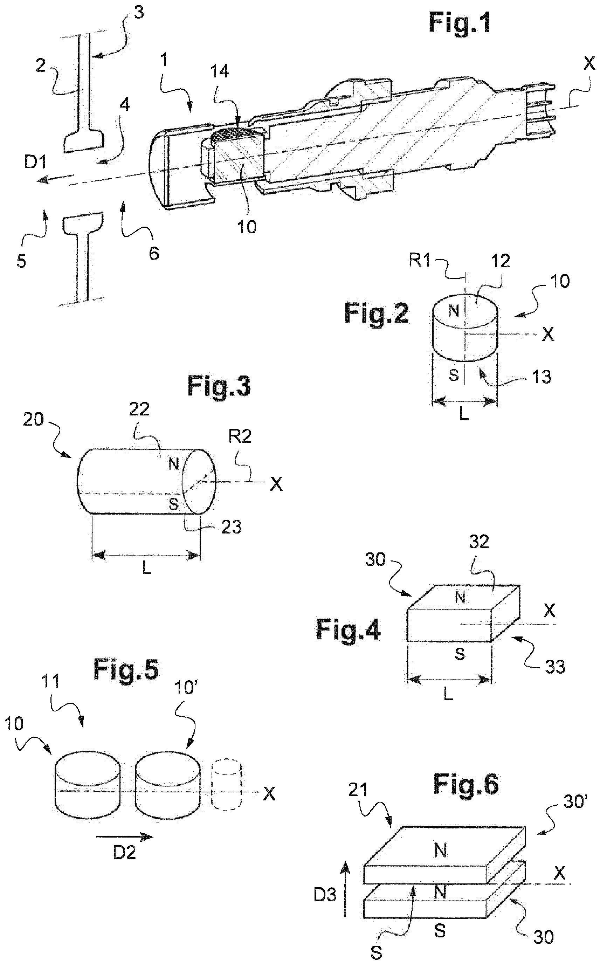

Ainsi tel que représenté à la figure 1, un dispositif magnétique 1 est destiné à être inséré suivant une direction rectiligne d'insertion D1 du dispositif magnétique 1 dans une paroi 2 d'un carter 3 présentant un orifice traversant 4.

En outre, cet orifice traversant 4 met en communication un volume intérieur 5 du carter 3 contenant le fluide de lubrification avec un volume extérieur 6 au carter 3. Par ailleurs, ce dispositif magnétique 1 présente un axe longitudinal X qui, lors de la mise en place du dispositif magnétique 1 dans l'orifice traversant 4, vient correspondre coaxialement avec la direction d'insertion D1. On note qu'un tel axe X est dit longitudinal dans la mesure où il s'étend selon une dimension longitudinale du dispositif magnétique.

De plus, tel que représenté aux figures 1 à 28, un tel dispositif magnétique 1 comporte d'une part au moins un aimant permanent 10, 10' 20, 30, 30', 40, 50, 60, 70 apte à attirer les particules métalliques, ce(s) aimant(s) permanent(s) comportant au moins deux faces polaires 12, 22, 32, 42, 52, 62, 72 et 13, 23, 33, 43, 53, 63, 73 de polarités distinctes l'une de l'autre, et d'autre part au moins un organe de détection de présence 14, 14', 24, 34, 44, 64, 74, 84, 94, 104 des particules métalliques attirées par le(s) aimant(s) permanent(s) 10, 10', 20, 30, 30', 40, 50, 60, 70.

En outre, de nombreuses variantes d'aimants permanents 10, 10' 20, 30, 30', 40, 50, 60, 70 et d'organes de détection de présence 14, 14', 24, 34, 44, 64, 74, 84, 94, 104 seront décrites ci-après. De même, la solidarisation relative entre l'aimant permanent 10, 10' 20, 30, 30', 40, 50, 60, 70 et l'organe de détection de présence 14, 14', 24, 34, 44, 64, 74, 84, 94, 104 peut être réalisée de différente manières et peut par exemple être de type réversible pour faciliter la récupération et l'analyse des particules métalliques collectées par le dispositif magnétique 1, 11, 21, 101. Une telle solidarisation de type réversible peut notamment être réalisée par des moyens d'encliquetage entre une extrémité amovible du dispositif magnétique 1, 11, 21, 101 comprenant l'organe de détection de présence 14, 14', 24, 34, 44, 64, 74, 84, 94, 104 et un corps du dispositif magnétique 1, 11, 21, 101 comportant l'aimant permanent 10, 10' 20, 30, 30', 40, 50, 60, 70.

Tel que représenté à la figure 2, un tel aimant permanent 10 peut présenter une forme cylindrique d'axe de révolution R1 agencée perpendiculairement par rapport à l'axe longitudinal X.

L'aimant permanent 10 comporte alors deux faces polaires 12 et 13 circulaires de polarités distinctes s'étendant respectivement parallèlement par rapport à l'axe longitudinal X.

Les deux faces polaires 12 et 13 présentent respectivement chacune une dimension longitudinale L parallèle à l'axe longitudinal X. Avantageusement, une telle dimension longitudinale L peut être comprise entre 1 et 50 mm (millimètres) préférentiellement entre 5 et 30 mm (millimètres).

De même tel que représenté à la figure 3, l'aimant permanent 20 peut présenter une forme cylindrique d'axe de révolution R2 agencée coaxialement avec l'axe longitudinal X.

L'aimant permanent 20 comporte alors deux faces polaires 22 et 23 partiellement cylindriques de polarités distinctes s'étendant respectivement suivant l'axe longitudinal X.

Comme précédemment, les deux faces polaires 22 et 23 présentent donc également respectivement chacune une dimension longitudinale L parallèle à l'axe longitudinal X.

Tel que représenté à la figure 4, l'aimant permanent 30 peut quant à lui présenter une forme parallélépipédique rectangle dont quatre des faces sont agencées parallèlement par rapport à l'axe longitudinal X.

L'aimant permanent 30 comporte alors deux faces polaires 32 et 33 planes et de polarités distinctes s'étendant parallèlement à l'axe longitudinal X.

Comme précédemment, les deux faces polaires 32 et 33 présentent donc également respectivement chacune une dimension longitudinale L parallèle à l'axe longitudinal X.

Tels que représentés aux figures 5 et 6, les dispositifs magnétiques 11, 21 peuvent également comporter plusieurs aimants permanents 10, 30 et 10', 30' juxtaposés.

Ainsi conformément à la figure 5, les aimants permanents 10 et 10' peuvent être agencés l'un à côté de l'autre suivant une première direction de translation D2 orientée parallèlement par rapport à l'axe longitudinal X.

Par ailleurs et tel que représenté à la figure 6, les aimants permanents 30 et 30' peuvent être agencés l'un au dessus de l'autre suivant une deuxième direction de translation D3 orientée perpendiculairement par rapport à l'axe longitudinal X.

Par ailleurs conformément à une première variante de l'invention, les aimants permanents 10, 10' 20, 30 et 30' sont de type unipôle comportant deux faces polaires 12, 22, 32 et 13, 23, 33 de polarités distinctes l'une de l'autre. En outre, ces deux faces polaires 12, 22, 32 et 13, 23, 33 sont avantageusement orientées symétriquement par rapport à l'axe longitudinal X.

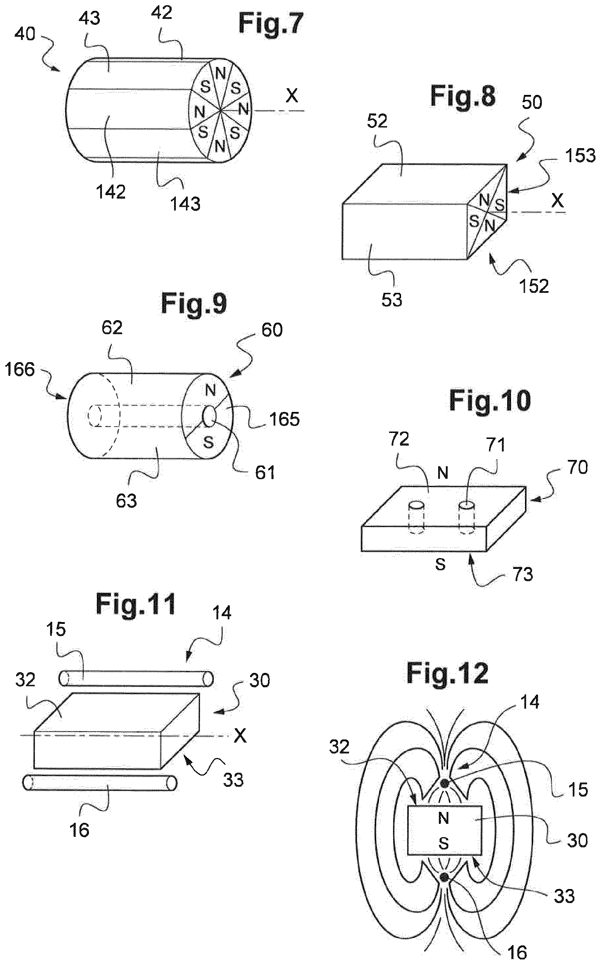

Tels que représentés aux figures 7 et 8 selon une seconde variante de l'invention, les aimants permanents 40, 50 peuvent également être de type multipôle. Par exemple, de tels aimants permanents 40, 50 peuvent être fabriqués par un procédé de frittage et consister en un ensemble monolithique formé dans un alliage de néodyme, de fer et de bore généralement désigné par la formule chimique Nd2Fe14B.

Dans ce cas, les aimants permanents 40, 50 comportent alors chacun au moins quatre faces polaires 42, 52, 43, 53, 142, 152 et 143, 153 orientées radialement par rapport à l'axe longitudinal X.

Telles que représentées à la figure 7, les faces polaires 42, 43, 142 et 143 étant agencées les unes à côté des autres en étant deux à deux de polarités distinctes l'une de l'autre. De telles faces polaires 42, 43, 142 et 143 sont partiellement cylindriques de polarités distinctes s'étendant respectivement suivant l'axe longitudinal X.

De façon alternative et telles que représentées à la figure 8, les faces polaires 52, 53, 152 et 153 peuvent également être formées par des plans juxtaposés de différentes polarités distinctes les unes des autres. De telles faces polaires 52, 53, 152 et 153 s'étendent alors respectivement parallèlement par rapport à l'axe longitudinal X.

Par ailleurs tel que représenté à la figure 9, quel que soit le type de l'aiment permanent, unipôle ou multipôle, un tel aimant permanent 60 peut comporter au moins un trou longitudinal 61 s'entendant parallèlement par rapport à l'axe longitudinal X. Ce trou longitudinal 61 est alors traversant entre une face proximale 165 et une face distale 166 de l'aimant permanent 60.

De même tel que représenté à la figure 10, quel que soit le type de l'aiment permanent, unipôle ou multipôle, un aimant permanent 70 peut comporter au moins un trou transversal 71 s'étendant perpendiculairement par rapport à l'axe longitudinal X. Dans ce cas, les trous transversaux 71 sont alors traversant entre une première face polaire 72 et une seconde face polaire 73 de l'aimant permanent 70.

En outre, tel(s) que représenté(s) aux figures 11 à 28 le(s) organe(s) de détection de présence 14, 14', 24, 34, 44, 64, 74, 84, 94, 104 des particules métalliques est (sont) agencé(s), en tout ou partie, en regard des au moins deux faces polaires 12, 22, 32, 42, 52, 62, 72 et 13, 23, 33, 43, 53, 63, 73.

En effet, tels que représentés aux figures 11 à 14 correspondant à un premier mode de réalisation de l'invention, les organes de détection de présence 14, 14' comportent au moins deux barreaux 15, 15' et 16, 16' électriquement conducteurs. Dans ce cas, un premier barreau 15, 15' est alors agencé en regard d'une première face polaire 12, 32 de polarité positive et un second barreau 16, 16' est agencé en regard d'une seconde face polaire 13, 33 de polarité négative.

De tels barreaux 15, 15' et 16, 16' peuvent également être agencés parallèlement par rapport à l'axe longitudinal X et sont écartés d'une distance prédéterminée respectivement de la première face polaire 12, 32 et de la seconde face polaire 13, 33.

Tel que représenté aux figures 11 et 12, les organes de détection de présence 14 comportent un premier barreau 15 agencé en regard de la première face polaire 32 de polarité positive et un second barreau 16 agencé en regard de la seconde face polaire 33 de polarité négative.

Comme précédemment évoqué, dans ce cas la détection de présence de particules métalliques est réalisée par la fermeture d'un circuit électrique initialement ouvert entre d'une part l'un des deux barreaux 15 ou 16 et d'autre part l'une des deux faces polaires 32 ou 33 de l'aimant permanent 30.

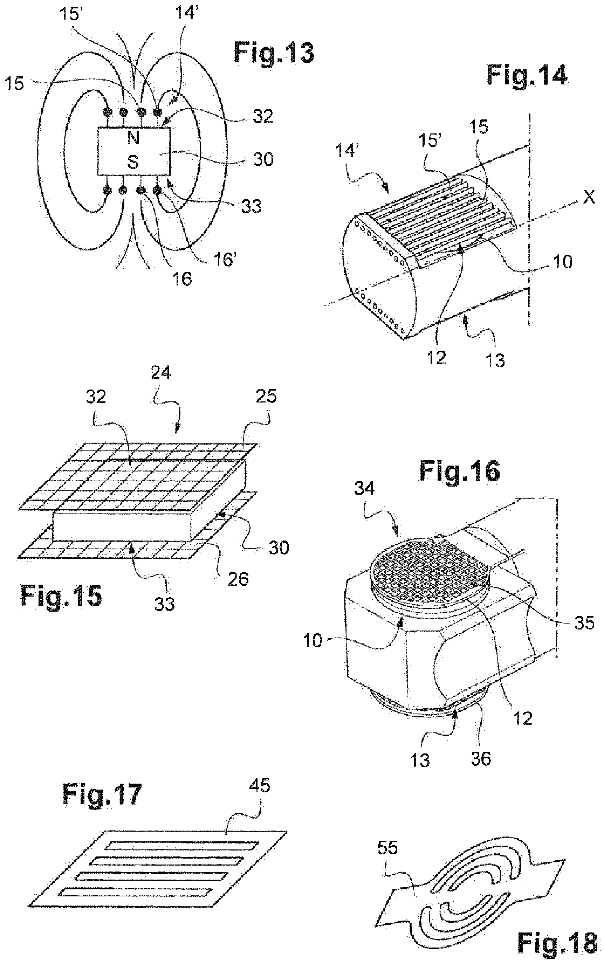

Selon une autre représentation du premier mode de réalisation de l'invention illustrée aux figures 13 et 14, les organes de détection de présence 14' peuvent également comporter plusieurs premiers barreaux 15, 15' agencés en regard de la première face polaire 12 de polarité positive et plusieurs seconds barreaux 16, 16' agencés en regard de la seconde face polaire 13 de polarité négative.

Selon un deuxième mode de réalisation de l'invention tel qu'illustré à la figure 15, l'organe de détection de présence 24 des particules métalliques comporte deux groupes 25 et 26 de deux nappes orientées de fils électriquement conducteurs formant une grille ou un textile ajouré. En outre, un premier groupe 25 est agencé en regard de la première face polaire 32 de polarité positive et un second groupe 26 est agencé en regard de la seconde face polaire 33 de polarité négative.

Comme précédemment évoqué, la détection de présence de particules métalliques est réalisée par la fermeture d'un circuit électrique initialement ouvert entre d'une part l'un des deux groupes 25 ou 26 et d'autre part l'une des deux faces polaires 32 ou 33 de l'aimant permanent 30.

Selon un troisième mode de réalisation de l'invention représenté aux figures 16 à 18, les organes de détection de présence 34 des particules métalliques peuvent comporter deux plaques perforées 35, 45, 55 et 36 électriquement conductrices. Ainsi, une première plaque 35, 45, 55 est agencée en regard de la première face polaire 12 de polarité positive et une seconde plaque 36 est quant à elle agencée en regard d'une seconde face polaire 13 de polarité négative.

Telles que représentées, les perforations des première et seconde plaques perforées 35, 45, 55 et 36 peuvent présenter différentes formes telles que notamment des carrés, des rectangles ou encore des portions annulaires.

Selon un quatrième mode de réalisation de l'invention illustré aux figures 20 et 21, les organes de détection de présence 64, 74 des particules métalliques comportent deux circuits imprimés 65, 75 et 66, 76 comportant respectivement deux pistes distinctes 67, 77 et 68, 78 électriquement conductrices et isolées électriquement l'une de l'autre. Ainsi, un premier circuit imprimé 65, 75 est alors agencé en regard d'une première face polaire 12, 32 de polarité positive et un second circuit imprimé 66, 76 est agencé en regard d'une seconde face polaire 13, 33 de polarité négative.

Dans ce cas, sur chacun des deux circuits imprimés 65, 75 et 66, 76, la détection de présence de particules métalliques peut être réalisée par la fermeture d'un circuit électrique initialement ouvert entre l'une des deux pistes 67, 77 électriquement conductrices et l'autre piste 68, 78 électriquement conductrices.

En outre selon un cinquième mode représenté à la figure 19, l'organe de détection de présence 44 des particules métalliques peut comporter un ensemble monolithique 46 formé d'une plaque perforée entourant au moins partiellement l'aimant permanent 30 en recouvrant la première face polaire 32 de polarité positive et la seconde face polaire 33 de polarité négative.

Selon d'autres représentations de ce cinquième mode telles qu'illustrées aux figures 22 et 23, l'organe de détection de présence 84, 94 des particules métalliques peut comporter un ensemble monolithique 86, 96 formant un circuit imprimé 85, 95 comportant deux pistes distinctes 87, 97 et 88, 98 électriquement conductrices et isolées électriquement l'une de l'autre. Dans ce cas, un tel circuit imprimé 85, 95 entoure totalement l'aimant permanent 30.

Par ailleurs, le circuit imprimé 85, 95 peut présenter un volume d'encombrement extérieur de forme cylindrique ou de forme parallélépipédique rectangle.

Selon un sixième mode de réalisation de l'invention représenté aux figures 24 à 28, l'organe de détection de présence 104 des particules métalliques peut comporter une pluralité de plaques creuses électriquement conductrices 105, 106 séparées les unes des autres par une pluralité de plaques creuses électriquement isolantes 107. En pratique, les plaques creuses électriquement conductrices 105, 106 et isolantes 107 sont alors agencées parallèlement les unes par rapport aux autres et perpendiculairement par rapport à l'axe longitudinal X du dispositif magnétique 101.

En outre, telles que représentées à la figure 25, les plaques creuses électriquement conductrices 105, 106 et isolantes 107 peuvent présenter respectivement chacune au moins deux alésages traversants 108, 109. Dans ce cas, des premiers alésages 108 des plaques creuses électriquement conductrices 105, 106 et isolantes 107 sont agencés coaxialement entre eux autour d'un premier axe X' et des seconds alésages 109 des plaques creuses électriquement conductrices 105, 106 et isolantes 107 sont agencés coaxialement entre eux autour d'un second axe X".

Par ailleurs, les premier axe X' et second axe X" sont agencés parallèlement avec l'axe longitudinal X du dispositif magnétique 101. De tels alésages traversants 108, 109 permettent alors de relier électriquement entre elles, via une première tige conductrice 118, d'une part les plaques d'un premier jeu de plaques creuses électriquement conductrices 105 et d'autre part, via une seconde tige conductrice 119, les plaques d'un second jeu de plaques creuses électriquement conductrices 106.

Dans ce cas, et comme pour les organes de détection comportant un ou plusieurs circuits imprimés, la détection de présence de particules métalliques peut être réalisée par la fermeture d'un circuit électrique initialement ouvert entre l'une des plaques creuses électriquement conductrices 105 et l'une des plaques creuses électriquement conductrices 106.

En outre tel que représenté aux figures 26 à 28, le dispositif magnétique 101 peut également comporter un clapet d'obturation 100 agencé en regard d'une face distale 166 de l'aimant permanent 30 et perpendiculairement par rapport à l'axe longitudinal X. Dans ce cas, les plaques creuses électriquement conductrices 105, 106 et isolantes 107 peuvent présenter respectivement chacune au moins deux échancrures 112 et 113 symétriques l'une de l'autre par rapport à l'axe longitudinal X.

De telles échancrures 112 et 113 permettent alors à deux branches 114 et 115 parallèles à l'axe longitudinal X de supporter le clapet d'obturation 100.

Au surplus, un tel clapet d'obturation 100 peut être associé à des moyens de rappel élastiques 103 permettant d'obturer automatiquement le carter lorsque l'aimant permanent 30 et l'organe de détection de présence 104 des particules métalliques sont extraits du dispositif magnétique 101.

En outre, le clapet d'obturation 100 peut également être agencé mobile en translation par rapport au support de fixation 102 du dispositif magnétique 101 sur le carter 3. Un tel clapet d'obturation 100 peut alors être déplacé dans un premier sens de déplacement parallèle à l'axe longitudinal X vers une position d'obturation à l'aide des moyens de rappel élastiques 103. En revanche lorsque l'aimant permanent 30 et l'organe de détection de présence 104 des particules métalliques sont insérés à nouveau dans le support de fixation 102 du dispositif magnétique 101, le clapet d'obturation 100 est déplacé selon un second sens de déplacement opposé au premier sens de déplacement vers une position d'ouverture.

Tel que représenté à la figure 28, un tel dispositif magnétique 101 peut comporter un premier jeu de deux premières tiges conductrices 119 permettant à la fois de relier électriquement entre elles les plaques du premier jeu de plaques creuses électriquement conductrices 105 et de les centrer par rapport à l'axe longitudinal X. De même, le dispositif magnétique 101 peut également comporter un second jeu de deux secondes tiges conductrices 118 permettant à la fois de relier électriquement entre elles les plaques du second jeu de plaques creuses électriquement conductrices 106 et de les centrer par rapport à l'axe longitudinal X.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. L'invention est définie par les revendications ci-jointes.

## Revendications

1. Dispositif magnétique (1, 11, 21, 101) destiné à capter des particules métalliques d'usure en suspension dans un fluide de lubrification, ledit dispositif magnétique (1, 11, 21, 101) étant destiné à être inséré suivant une direction rectiligne d'insertion (D1) dudit dispositif magnétique (1, 11, 21, 101) dans une paroi (2) d'un carter (3) au niveau d'un orifice traversant (4) permettant de mettre en communication un volume intérieur (5) dudit carter (3) contenant ledit fluide de lubrification avec un volume extérieur (6) audit carter (3), ledit dispositif magnétique (1, 11, 21, 101) présentant un axe longitudinal X, ledit axe longitudinal X étant destiné à correspondre coaxialement avec ladite direction d'insertion (D1) dudit dispositif magnétique (1, 11, 21, 101) dans ledit carter (3), ledit dispositif magnétique (1, 11, 21, 101) comportant :
• au moins un aimant permanent (10, 10' 20, 30, 30', 40, 50, 60, 70) apte à attirer lesdites particules métalliques, ledit au moins un aimant permanent comportant au moins deux faces polaires (12, 22, 32, 42, 52, 62, 72 et 13, 23, 33, 43, 53, 63, 73) de polarités distinctes l'une de l'autre, et
• au moins un organe de détection de présence (14, 14', 24, 34, 44, 64, 74, 84, 94, 104) desdites particules métalliques attirées par ledit au moins un aimant permanent (10, 10', 20, 30, 30', 40, 50, 60, 70),
lesdites au moins deux faces polaires (12, 22, 32, 42, 52, 62, 72 et 13, 23, 33, 43, 53, 63, 73) s'étendant respectivement principalement suivant ledit axe longitudinal X et lesdites au moins deux faces polaires (12, 22, 32, 42, 52, 62, 72 et 13, 23, 33, 43, 53, 63, 73) présentant respectivement chacune une dimension longitudinale L parallèle audit axe longitudinal X comprise entre 1 et 50 mm (millimètres) et préférentiellement entre 5 et 30 mm (millimètres),
**caractérisé en ce que** ledit au moins un organe de détection de présence (14, 14', 24, 34, 44, 64) desdites particules métalliques est agencé totalement en regard d'une desdites au moins deux faces polaires (12, 22, 32, 42, 52, 62, 72 et 13, 23, 33, 43, 53, 63, 73).

2. Dispositif selon la revendication 1,
**caractérisé en ce que** ledit au moins un aimant permanent (10, 10', 20, 30, 30', 40, 50, 60, 70) présente un volume d'encombrement extérieur de forme choisie parmi le groupe comportant les cylindres et les parallélépipèdes rectangles.

3. Dispositif selon l'une quelconque des revendications 1 à 2, **caractérisé en ce que** ledit dispositif magnétique (11) comporte au moins deux aimants permanents (10 et 10') agencés l'un à côté de l'autre suivant une première direction de translation (D2) orientée parallèlement par rapport audit axe longitudinal X.

4. Dispositif selon l'une quelconque des revendications 1 à 3, **caractérisé en ce que** ledit dispositif magnétique (21) comporte au moins deux aimants permanents (30 et 30') agencés l'un au dessus de l'autre suivant une deuxième direction de translation (D3) orientée perpendiculairement par rapport audit axe longitudinal X.

5. Dispositif selon l'une quelconque des revendications 1 à 4, **caractérisé en ce que** ledit au moins un aimant permanent (10, 10', 20, 30, 30', 60, 70) est de type unipôle comportant deux faces polaires (12, 22, 32, 62, 72 et 13, 23, 33, 63, 73) de polarités distinctes l'une de l'autre, lesdites deux faces polaires (12, 22, 32, 62, 72) et (13, 23, 33, 63, 73) étant orientées symétriquement par rapport audit axe longitudinal X.

6. Dispositif selon l'une quelconque des revendications 1 à 4, **caractérisé en ce que** ledit au moins un aimant permanent (40, 50) est de type multipôle comportant au moins quatre faces polaires (42, 52), (43, 53), (142, 152) et (143, 153) orientées radialement par rapport audit axe longitudinal X, lesdites au moins quatre faces polaires (42, 52), (43, 53), (142, 152) et (143, 153) étant agencées les unes à côté des autres en étant deux à deux de polarités distinctes l'une de l'autre.

7. Dispositif selon l'une quelconque des revendications 1 à 6, **caractérisé en ce que** ledit au moins un aimant permanent (60) comporte au moins un trou longitudinal (61) s'étendant parallèlement par rapport audit axe longitudinal X, ledit au moins un trou longitudinal (61) étant traversant entre une face proximale (165) dudit au moins un aimant permanent (60) et une face distale (166) dudit au moins un aimant permanent (60).

8. Dispositif selon l'une quelconque des revendications 1 à 7, **caractérisé en ce que** ledit au moins un aimant permanent (70) comporte au moins un trou transversal (71) s'entendant perpendiculairement par rapport audit axe longitudinal X, ledit au moins un trou transversal (71) étant traversant entre une première face polaire (72) dudit au moins un aimant permanent (70) et une seconde face polaire (73) dudit au moins un aimant permanent (70).

9. Dispositif selon l'une quelconque des revendications 1 à 8, **caractérisé en ce que** ledit au moins un organe de détection de présence (14, 14') desdites particules métalliques comporte au moins deux barreaux (15, 15' et 16, 16') électriquement conducteurs, un premier barreau (15, 15') étant agencé en regard d'une première face polaire (12, 32) de polarité positive et un second barreau (16, 16') étant agencé en regard d'une seconde face polaire (13, 33) de polarité négative.

10. Dispositif selon l'une quelconque des revendications 1 à 8,
**caractérisé en ce que** ledit au moins un organe de détection de présence (24) desdites particules métalliques comporte deux groupes (25 et 26) de deux nappes orientées de fils électriquement conducteurs formant une grille ou un textile ajouré, un premier groupe (25) étant agencé en regard d'une première face polaire (32) de polarité positive et un second groupe (26) étant agencé en regard d'une seconde face polaire (33) de polarité négative.

11. Dispositif selon l'une quelconque des revendications 1 à 8,
**caractérisé en ce que** ledit au moins un organe de détection de présence (34) desdites particules métalliques comporte deux plaques perforées (35, 45, 55 et 36) électriquement conductrices, une première plaque (35, 45, 55) étant agencée en regard d'une première face polaire (12) de polarité positive et une seconde plaque (36) étant agencée en regard d'une seconde face polaire (13) de polarité négative.

12. Dispositif selon l'une quelconque des revendications 1 à 8,
**caractérisé en ce que** ledit au moins un organe de détection de présence (64, 74) desdites particules métalliques comporte deux circuits imprimés (65, 75 et 66, 76) comportant respectivement deux pistes distinctes (67, 77 et 68, 78) électriquement conductrices et isolées électriquement l'une de l'autre, un premier circuit imprimé (65, 75) étant agencé en regard d'une première face polaire (12, 32) de polarité positive et un second circuit imprimé (66, 76) étant agencé en regard d'une seconde face polaire (13, 33) de polarité négative.

13. Dispositif selon l'une quelconque des revendications 1 à 8,
**caractérisé en ce que** ledit au moins un organe de détection de présence (104) desdites particules métalliques comporte une pluralité de plaques creuses électriquement conductrices (105, 106) séparées les unes des autres par une pluralité de plaques creuses électriquement isolantes (107), lesdites plaques creuses électriquement conductrices (105, 106) et isolantes (107) étant agencées parallèlement les unes par rapport aux autres et perpendiculairement par rapport audit axe longitudinal X.

14. Dispositif selon la revendication 13,
**caractérisé en ce que** lesdites plaques creuses électriquement conductrices (105, 106) et isolantes (107) présentent respectivement chacune au moins deux alésages traversants (108, 109), des premiers alésages (108) desdites plaques creuses électriquement conductrices (105, 106) et isolantes (107) étant agencés coaxialement entre eux autour d'un premier axe X' et des seconds alésages (109) desdites plaques creuses électriquement conductrices (105, 106) et isolantes (107) étant agencés coaxialement entre eux autour d'un second axe X", lesdits premier axe X' et second axe X" étant parallèles audit axe longitudinal X.

15. Dispositif selon l'une quelconque des revendications 13 à 14,
**caractérisé en ce que** ledit dispositif magnétique (101) comporte un clapet d'obturation (100) agencé en regard d'une face distale (166) dudit au moins un aimant permanent (30) et perpendiculairement par rapport audit axe longitudinal X, lesdites plaques creuses électriquement conductrices (105, 106) et isolantes (107) présentant respectivement chacune au moins deux échancrures (112 et 113) symétriques l'une de l'autre par rapport audit axe longitudinal X, lesdites au moins deux échancrures (112 et 113) étant aptes à recevoir deux branches (114 et 115) parallèles audit axe longitudinal X, lesdites deux branches (114 et 115) étant solidaires dudit clapet d'obturation (100).

## Patentansprüche

1. Magnetvorrichtung (1, 11, 21, 101) zum Auffangen von in einer Schmierflüssigkeit suspendierten metallischen Abriebpartikeln, wobei die Magnetvorrichtung (1, 11, 21, 101) dazu bestimmt ist, entlang einer geraden Einführrichtung (D1) der magnetischen Vorrichtung (1, 11, 21, 101) in eine Wand (2) eines Gehäuses (3) auf der Höhe einer Durchgangsöffnung (4) eingeführt zu werden, die es ermöglicht, ein das Schmierfluid enthaltendes Innenvolumen (5) des Gehäuses (3) mit einem Außenvolumen (6) des Gehäuses (3) zu verbinden, wobei die Magnetvorrichtung (1, 11, 21, 101) eine Längsachse X aufweist, wobei die Längsachse X dazu bestimmt ist, koaxial mit der Einführrichtung (D1) der Magnetvorrichtung (1, 11, 21, 101) in das Gehäuse (3) zu korrespondieren, wobei die Magnetvorrichtung (1, 11, 21, 101) umfasst:
- mindestens einen Permanentmagneten (10, 10', 20, 30, 30', 40, 50, 60, 70), der geeignet ist, die metallischen Partikel anzuziehen, wobei der mindestens eine Permanentmagnet mindestens zwei Polflächen (12, 22, 32, 42, 52, 62, 72 und 13, 23, 33, 43, 53, 63, 73) mit voneinander verschiedenen Polaritäten aufweist, und
- mindestens eine Einrichtung (14, 14', 24, 34, 44, 64, 74, 84, 94, 104) zur Erkennung der Anwesenheit der von dem mindestens einen Permanentmagneten (10, 10', 20, 30, 30', 40, 50, 60, 70) angezogenen metallischen Partikel,
wobei sich die mindestens zwei Polflächen (12, 22, 32, 42, 52, 62, 72 und 13, 23, 33, 43, 53, 63, 73) jeweils hauptsächlich entlang der Längsachse X erstrecken und die mindestens zwei Polflächen (12, 22, 32, 42, 52, 62, 72 und 13, 23, 33, 43, 53, 63, 73) jeweils eine Längsabmessung L parallel zur Längsachse X zwischen 1 und 50 mm (Millimetern) und vorzugsweise zwischen 5 und 30 mm (Millimetern) aufweisen,
**dadurch gekennzeichnet, dass** die mindestens eine Einrichtung (14, 14', 24, 34, 44, 64) zur Erkennung der Anwesenheit der metallischen Partikel vollständig gegenüber einer der mindestens zwei Polflächen (12, 22, 32, 42, 52, 62, 72 und 13, 23, 33, 43, 53, 63, 73) angeordnet ist.

2. Vorrichtung nach Anspruch 1,
**dadurch gekennzeichnet, dass** der mindestens eine Permanentmagnet (10, 10', 20, 30, 30', 40, 50, 60, 70) ein äußeres Raumvolumen mit einer Form aufweist, die aus der Gruppe ausgewählt ist, die aus Zylindern und Quadern besteht.

3. Vorrichtung nach einem der Ansprüche 1 bis 2,
**dadurch gekennzeichnet, dass** die Magnetvorrichtung (11) mindestens zwei Permanentmagnete (10 und 10') umfasst, die entlang einer parallel zur Längsachse X ausgerichteten ersten Translationsrichtung (D2) nebeneinander angeordnet sind.

4. Vorrichtung nach einem der Ansprüche 1 bis 3,
**dadurch gekennzeichnet, dass** die Magnetvorrichtung (21) mindestens zwei Permanentmagnete (30 und 30') umfasst, die entlang einer senkrecht zu der Längsachse X ausgerichteten zweiten Translationsrichtung (D3) übereinander angeordnet sind.

5. Vorrichtung nach einem der Ansprüche 1 bis 4,
**dadurch gekennzeichnet, dass** der mindestens eine Permanentmagnet (10, 10', 20, 30, 30', 60, 70) vom Unipol-Typ ist, der zwei Polflächen (12, 22, 32, 62, 72 und 13, 23, 33, 63, 73) mit voneinander verschiedenen Polaritäten aufweist, wobei die beiden Polflächen (12, 22, 32, 62, 72) und (13, 23, 33, 63, 73) symmetrisch in Bezug auf die Längsachse X ausgerichtet sind.

6. Vorrichtung nach einem der Ansprüche 1 bis 4,
**dadurch gekennzeichnet, dass** der mindestens eine Permanentmagnet (40, 50) vom Multipoltyp ist, der mindestens vier Polflächen (42, 52), (43, 53), (142, 152) und (143, 153) umfasst, die radial in Bezug auf die Längsachse X ausgerichtet sind, wobei die mindestens vier Polflächen (42, 52), (43, 53), (142, 152) und (143, 153) nebeneinander angeordnet sind und dabei paarweise voneinander verschiedene Polaritäten aufweisen.

7. Vorrichtung nach einem der Ansprüche 1 bis 6,
**dadurch gekennzeichnet, dass** der mindestens eine Permanentmagnet (60) mindestens ein Längsloch (61) aufweist, das sich parallel zu der Längsachse X erstreckt, wobei das mindestens eine Längsloch (61) zwischen einer proximalen Seite (165) des mindestens einen Permanentmagneten (60) und einer distalen Seite (166) des mindestens einen Permanentmagneten (60) durchgängig ist.

8. Vorrichtung nach einem der Ansprüche 1 bis 7,
**dadurch gekennzeichnet, dass** der mindestens eine Permanentmagnet (70) mindestens ein Querloch (71) aufweist, das sich senkrecht zu der Längsachse X erstreckt, wobei das mindestens eine Querloch (71) zwischen einer ersten Polfläche (72) des mindestens einen Permanentmagneten (70) und einer zweiten Polfläche (73) des mindestens einen Permanentmagneten (70) durchgängig ist.

9. Vorrichtung nach einem der Ansprüche 1 bis 8,
**dadurch gekennzeichnet, dass** die mindestens eine Einrichtung (14, 14') zur Erkennung der Anwesenheit der metallischen Partikel mindestens zwei elektrisch leitende Stäbe (15, 15' und 16, 16') umfasst, wobei ein erster Stab (15, 15') gegenüber einer ersten Polfläche (12, 32) mit positiver Polarität angeordnet ist und ein zweiter Stab (16, 16') gegenüber einer zweiten Polfläche (13, 33) mit negativer Polarität angeordnet ist.

10. Vorrichtung nach einem der Ansprüche 1 bis 8,
**dadurch gekennzeichnet, dass** die mindestens eine Einrichtung (24) zur Erkennung der Anwesenheit der metallischen Partikel zwei Gruppen (25 und 26) aus zwei ausgerichteten Lagen elektrisch leitender Drähte umfasst, die ein Gitter oder ein durchbrochenes Gewebe bilden, wobei eine erste Gruppe (25) gegenüber einer ersten Polfläche (32) mit positiver Polarität angeordnet ist und eine zweite Gruppe (26) gegenüber einer zweiten Polfläche (33) mit negativer Polarität angeordnet ist.

11. Vorrichtung nach einem der Ansprüche 1 bis 8,
**dadurch gekennzeichnet, dass** die mindestens eine Einrichtung (34) zur Erkennung der Anwesenheit der metallischen Partikel zwei perforierte, elektrisch leitende Platten (35, 45, 55 und 36) umfasst, wobei eine erste Platte (35, 45, 55) gegenüber einer ersten Polfläche (12) mit positiver Polarität angeordnet ist und eine zweite Platte (36) gegenüber einer zweiten Polfläche (13) mit negativer Polarität angeordnet ist.

12. Vorrichtung nach einem der Ansprüche 1 bis 8,
**dadurch gekennzeichnet, dass** die mindestens eine Einrichtung (64, 74) zur Erkennung der Anwesenheit der metallischen Partikel zwei Leiterplatten (65, 75 und 66, 76) umfasst, die jeweils zwei unterschiedliche, elektrisch leitende und elektrisch voneinander isolierte Leiterbahnen (67, 77 und 68, 78) aufweisen, wobei eine erste Leiterplatte (65, 75) gegenüber einer ersten Polfläche (12, 32) mit positiver Polarität angeordnet ist und eine zweite Leiterplatte (66, 76) gegenüber einer zweiten Polfläche (13, 33) mit negativer Polarität angeordnet ist.

13. Vorrichtung nach einem der Ansprüche 1 bis 8,
**dadurch gekennzeichnet, dass** die mindestens eine Einrichtung zur Erkennung des Vorhandenseins (104) der metallischen Partikel eine Mehrzahl von elektrisch leitenden Hohlplatten (105, 106) umfasst, die voneinander durch eine Mehrzahl von elektrisch isolierenden Hohlplatten (107) getrennt sind, wobei die elektrisch leitenden (105, 106) und isolierenden Hohlplatten (107) parallel zueinander und senkrecht zu der Längsachse X angeordnet sind.

14. Vorrichtung nach Anspruch 13,
**dadurch gekennzeichnet, dass** die elektrisch leitenden (105, 106) und isolierenden Hohlplatten (107) jeweils mindestens zwei durchgehende Bohrungen (108, 109) aufweisen, wobei erste Bohrungen (108) der elektrisch leitenden (105, 106) und isolierenden Hohlplatten (107) koaxial zueinander um eine erste Achse X' angeordnet sind und zweite Bohrungen (109) der elektrisch leitenden (105, 106) und isolierenden Hohlplatten (107) koaxial zueinander um eine zweite Achse X " angeordnet sind, wobei die erste Achse X' und die zweite Achse X " parallel zu der Längsachse X sind.

15. Vorrichtung nach einem der Ansprüche 13 bis 14,
**dadurch gekennzeichnet, dass** die Magnetvorrichtung (101) ein Verschlussventil (100) umfasst, das gegenüber einer distalen Fläche (166) des mindestens einen Permanentmagneten (30) und senkrecht zu der Längsachse X angeordnet ist, wobei die elektrisch leitenden (105, 106) und isolierenden Hohlplatten (107) jeweils mindestens zwei Ausschnitte (112 und 113) aufweisen, die in Bezug auf die Längsachse X zueinander symmetrisch sind, wobei die mindestens zwei Ausschnitte (112 und 113) geeignet sind, zwei zur Längsachse X parallele Schenkel (114 und 115) aufzunehmen, wobei die zwei Schenkel (114 und 115) fest mit dem Verschlussventil (100) verbunden sind.

## Claims

1. Magnetic device (1, 11, 21, 101) intended for capturing wear metal particles suspended in a lubrication fluid, said magnetic device (1, 11, 21, 101) being intended for being inserted in a rectilinear insertion direction (D1) of said magnetic device (1, 11, 21, 101) in a wall (2) of a casing (3) at a through orifice (4) allowing an internal space (5) of said casing (3) containing said lubrication fluid to be placed in communication with a space (6) external to said casing (3), said magnetic device (1, 11, 21, 101) having a longitudinal axis X, said longitudinal axis X being intended for corresponding coaxially with said insertion direction (D1) of said magnetic device (1, 11, 21, 101) in said casing (3), said magnetic device (1, 11, 21, 101) comprising:
• at least one permanent magnet (10, 10', 20, 30, 30', 40, 50, 60, 70) able to attract said metal particles, said at least one permanent magnet comprising at least two polar sides (12, 22, 32, 42, 52, 62, 72 and 13, 23, 33, 43, 53, 63, 73) of polarities different from each other, and
• at least one component (14, 14', 24, 34, 44, 64, 74, 84, 94, 104) for detecting the presence of said metal particles attracted by said at least one permanent magnet (10, 10', 20, 30, 30', 40, 50, 60, 70),
said at least two polar sides (12, 22, 32, 42, 52, 62, 72 and 13, 23, 33, 43, 53, 63, 73) respectively extending mainly along said longitudinal axis X and said at least two polar sides (12, 22, 32, 42, 52, 62, 72 and 13, 23, 33, 43, 53, 63, 73) respectively each having a longitudinal dimension L parallel to said longitudinal axis X of between 1 and 50 mm (millimetres), and preferably between 5 and 30 mm (millimetres),
**characterised in that** said at least one component (14, 14', 24, 34, 44, 64) for detecting the presence of said metal particles is arranged totally facing one of said at least two polar sides (12, 22, 32, 42, 52, 62, 72 and 13, 23, 33, 43, 53, 63, 73).

2. Device according to Claim 1, **characterised in that** said at least one permanent magnet (10, 10', 20, 30, 30', 40, 50, 60, 70) has an outside dimensional volume of a shape chosen among the group comprising cylinders and parallelepiped rectangles.

3. Device according to either one of Claims 1 to 2, **characterised in that** said magnetic device (11) comprises at least two permanent magnets (10 and 10') arranged next to each other along a first translation direction (D2) oriented parallel with respect to said longitudinal axis X.

4. Device according to any one of Claims 1 to 3, **characterised in that** said magnetic device (21) comprises at least two permanent magnets (30 and 30') arranged one above the other along a second translation direction (D3) oriented perpendicular with respect to said longitudinal axis X.

5. Device according to any one of Claims 1 to 4, **characterised in that** said at least one permanent magnet (10, 10', 20, 30, 30', 60, 70) is of a unipole type comprising two polar sides (12, 22, 32, 62, 72 and 13, 23, 33, 63, 73) of polarities different from each other, said two polar sides (12, 22, 32, 62, 72) and (13, 23, 33, 63, 73) being oriented symmetrically with respect to said longitudinal axis X.

6. Device according to any one of Claims 1 to 4, **characterised in that** said at least one permanent magnet (40, 50) is of a multipole type comprising at least four polar sides (42, 52), (43, 53), (142, 152) and (143, 153) oriented radially with respect to said longitudinal axis X, said at least four polar sides (42, 52), (43, 53), (142, 152) and (143, 153) being arranged next to each other while being in pairs of polarities different from each other.

7. Device according to any one of Claims 1 to 6, **characterised in that** said at least one permanent magnet (60) comprises at least one longitudinal hole (61) extending parallel with respect to said longitudinal axis X, said at least one longitudinal hole (61) passing through between a proximal side (165) of said at least one permanent magnet (60) and a distal side (166) of said at least one permanent magnet (60).

8. Device according to any one of Claims 1 to 7, **characterised in that** said at least one permanent magnet (70) comprises at least one cross hole (71) extending perpendicular with respect to said longitudinal axis X, said at least one cross hole (71) passing through between a first polar side (72) of said at least one permanent magnet (70) and a second polar side (73) of said at least one permanent magnet (70).

9. Device according to any one of Claims 1 to 8, **characterised in that** said at least one component (14, 14') for detecting the presence of said metal particles comprises at least two electrically conducting bars (15, 15' and 16, 16'), a first bar (15, 15') being arranged facing a first polar side (12, 32) of positive polarity and a second bar (16, 16') being arranged facing a second polar side (13, 33) of negative polarity.

10. Device according to any one of Claims 1 to 8, **characterised in that** said at least one component (24) for detecting the presence of said metal particles comprises two groups (25 and 26) of two oriented layers of electrically conducting wires forming a grid or an openwork textile, a first group (25) being arranged facing a first polar side (32) of positive polarity and a second group (26) being arranged facing a second polar side (33) of negative polarity.

11. Device according to any one of Claims 1 to 8, **characterised in that** said at least one component (34) for detecting the presence of said metal particles comprises two perforated electrically conducting plates (35, 45, 55 and 36), a first plate (35, 45, 55) being arranged facing a first polar side (12) of positive polarity and a second plate (36) being arranged facing a second polar side (13) of negative polarity.

12. Device according to any one of Claims 1 to 8, **characterised in that** said at least one component (64, 74) for detecting the presence of said metal particles comprises two printed circuits (65, 75 and 66, 76) respectively comprising two different electrically conducing tracks (66, 77 and 68, 78) and electrically insulated with respect to each other, a first printed circuit (65, 75) being arranged facing a first polar side (12, 32) of positive polarity and a second printed circuit (66, 76) being facing a second polar side (13, 33) of negative polarity.

13. Device according to any one of Claims 1 to 8, **characterised in that** said at least one component (104) for detecting the presence of said metal particles comprises a plurality of electrically conducting hollow plates (105, 106) separated from each other by a plurality of electrically insulating hollow plates (107), said electrically conducting hollow plates (105, 106) and insulating (107) hollow plates being arranged parallel with respect to each other and perpendicular with respect to said longitudinal axis X.

14. Device according to Claim 13, **characterised in that** said electrically conducting hollow plates (105, 106) and insulating hollow plates (107) respectively each have a least two through holes (108, 109), first holes (108) of said electrically conducting hollow plates (105, 106) and insulating hollow plates (107) being arranged coaxially with each other around a first axis X' and second holes (109) of said electrically conducting hollow plates (105, 106) and insulating hollow plates (107) being arranged coaxially with each other around second axis X", said first axis X' and second axis X" being parallel to said longitudinal axis X.

15. Device according to either one of Claims 13 to 14, **characterised in that** said magnetic device (101) comprises a sealing valve (100) arranged facing a distal side (166) of said at least one permanent magnet (30) and perpendicular with respect to said longitudinal axis X, said electrically conducting hollow plates (105, 106) and insulating hollow plates (107) respectively each having at least two indentations (112 and 113) symmetrical with each other with respect to said longitudinal axis X, said at least two indentations (112 and 113) being able to accommodate two branches (114 and 115) parallel to said longitudinal axis X, said two branches (114 and 115) being integral with said sealing valve (100).
